Europäisches Patentamt

(19) European Patent Office

Office européen des brevets

(11) Publication number: **0 063 020**
**B1**

(12) **EUROPEAN PATENT SPECIFICATION**

(45) Date of publication of patent specification: **27.12.85**

(21) Application number: **82301794.2**

(22) Date of filing: **05.04.82**

(51) Int. Cl.⁴: **G 01 F 23/72**

(54) **Magnetic liquid level indicator.**

(30) Priority: **14.04.81 GB 8111798**

(43) Date of publication of application:
**20.10.82 Bulletin 82/42**

(45) Publication of the grant of the patent:
**27.12.85 Bulletin 85/52**

(84) Designated Contracting States:
**CH DE FR GB IT LI NL SE**

(56) References cited:
**AT-B- 269 503**
**CH-A- 360 220**
**DE-A-2 342 735**
**DE-B- 969 753**
**GB-A-2 028 505**
**US-A-3 964 312**

(73) Proprietor: **Klinger AG**
**Baarerstrasse 10**
**CH-6301 Zug (CH)**

(72) Inventor: **Sledmere, Alan Bainbridge**
**36 Howard Road**
**Dartford Kent DA1 1XH (GB)**

(74) Representative: **Ellis, John Clifford Holgate et al**
**MEWBURN ELLIS & CO. 2/3 Cursitor Street**
**London EC4A 1BQ (GB)**

Courier Press, Leamington Spa, England.

## Description

### Field of the Invention

This invention relates to liquid level indicators of the kind having a magnetized float capable of moving as the level of liquid moves and a plurality of magnetized indicator elements disposed one above the other past which the magnetized float travels as the liquid level rises or falls, the indicator elements being rotatable through 180° under the influence of the magnetized float.

### Background of the Invention

Such liquid level indicators are disclosed in US—A—3 964 213 and GB—A—2028505. They have indicator elements which are provided with different colours on opposite surfaces and are housed in a display box disposed in front of a vessel containing the liquid on which the magnetized float sits. As the magnet of the float moves past the elements they are rotated in turn so that those disposed below the liquid level present one colour to the viewer while those above present the other colour. Such devices have the advantage that there is no mechanical connection between the float (which may be in a pressurized container) and the indicator elements (which may be in a display box situated in the atmosphere). This is a particular advantage when handling hazardous fluids since there is no possible escape of the fluid through the device to the atmosphere through glands, joints or breakage of the gauge glass etc. However, we find that the elements of the known magnetic liquid level indicators (which are made of for example pressed steel), are provided only with a weak magnetic field which is unevenly distributed along their lengths. This is because the magnetic field is distributed so that polarization occurs only at corner regions of the elements so that, in effect, the end regions only of each element behave as a pair of parallel weak magnets which have respective like poles disposed at the corner edges and spaced apart from each other. this tends to produce a rather, weak, unstable field so thaz the elements tend to be relatively unstable to outside influences such as vibrations or passing magnetic fields. Furthermore, there is a possibility that some of the elements may not remain in position after the float has passed.

Attempts have been made to increase the magnetic field of indicator plates by bonding bar magnets on to them but this provides a rather cumbersome construction.

Both in conventional liquid level indicators and in certain indicators embodying the present invention as later described the float magnet may take the form of a bar magnet with a central iron ring to concentrate the field (see for example GB—A—2028505). Each end of the bar magnet has a polarity opposite to that of the ring and it is intended that only the polarity of the ring rotates the magnetized indicator elements and not that of the longitudinal ends of the bar magnet. When using such a float stops are usually provided on the indicator elements to ensure that they are not rotated past their desired position by the longitudinal ends of the bar magnet.

### Summary of the Invention

We provide a liquid level indicator including a magnetized float and magnetized indicator elements actuated thereby which indicator provides a stable magnetic field giving rapid and positive rotation of the indicator elements by the magnetized float, the indicator elements remaining in position after rotation through 180°. The indicator elements are stable to outside influences and are not readily disturbed inadvertently from their desired position. A preferred liquid level indicator in accordance with the invention includes a float which can be employed without providing stops on the indicator elements for prevention of excessive rotation thereof by the float and without the need to provide a particularly fine balance between the magnetic strengths of float magnet and indicator elements.

The invention provides a liquid level indicator capable of indicating the level of liquid in a housing, which indicator includes a magnetized float capable of moving as the liquid level moves and a plurality of elongate plate-like magnetized indicator elements disposed one above the other past which the magnetized float travels as the liquid level rises or falls, the magnetized indicator elements (a) each having opposite surfaces which are visually distinguishable from one another, (b) having respective surfaces generally of the same visual appearance as one another oriented generally in a vertical plane when the magnetized float is remote therefrom and (c) being pivotable about their respective longitudinal axes under the action of the magnetized float when the magnetized float lies adjacent thereto so as to provide said liquid level indication, characterized in that the magnetized indicator elements are each of a moulded mixture of particulate magnetizable material and plastics masterial, the said magnetized indicator elements being selectively polarized substantially completely along opposed longitudinal edges of the magnetized indicator element, which longitudinal edges have respective polarities which are opposite from one another.

The plate-like elements may assume an exactly vertical disposition to present a continuous coloured face in regions above and below the float.

By selecting indicator elements provided with the special magnetic field geometry described above, it is possible to provide a more stable and stronger magnetic field relative to the rotational inertia of the indicator elements as compared with that which can be achieved with conventional magnetized indicator elements of, for example pressed steel (which, we find, can only be magnetized to provide a weak, unstable magnetic field localized at corners of opposed longitudinal ends). As later described, the elements may be constructed from a lightweight material and provided with a particularly strong magnetic field relative to their rotational inertia.

In a liquid level indicator in accordance with the invention, the magnetized indicator elements are disposed one above the other and are pivotable so as to rotate as the magnetized float passes them. The top and bottom element of an adjacent pair which are not under the influence of the magnetized float will therefore provide adjacent longitudinal edges (the lowermost edge of the top element and the uppermost edge of the bottom element) which are of opposite, strong polarity along their entire respective edges. They are therefore strongly attracted towards one another and thereby locked in the vertical position.

When the elongate magnetized elements are actuated by the magnetized float, they provide an efficient, positive and rapid rotation, this being due to their strong magnetic field relative to their rotational inertia.

Materials which can be magnetized so as to selectively polarize complete opposed edges of elongate elements made therefrom are, for example, particulate magnetic materials such as ferritic materials distributed within a plastics carrier material by "ferritic material" is meant any magnetic material containing iron oxide(s) as a major component and optionally containing other metallic oxides and carbonates of, for example, rare earth metals.

When such a particulate magnetic material such as ferritic material is distributed within a plastics material, it is possible to mould such a composition into a thin, lightweight wafer of a neat, simple and elegant construction. An especially preferred wafer is manufactured by moulding, for example by injection moulding a mixture of powdered ferritic material and molten plastics material, for example, nylon and material so moulded is hereinafter referred to as "moulded ferrite".

The elongate indicator elements are magnetized in such a manner as to provide selective and opposite polarization of the entire respective oppposed longitudinal edges which are to be disposed generally horizontally on assembly of the liquid level indicator and before being influenced by the float. The strength of the magnetic field provided depends upon that of the float and vice versa. The magnetic strength of the indicator elements should be sufficiently strong to provide the positive rotation referred to above but not so strong that the float fails to actuate the indicator elements. In other words the relative magnetic strengths of indicator elements and float should be such that the indicator element-disturbing force provided by the float is greater than the linkage force between adjacent elements.

Although, for a liquid level indicator in accordance with the invention it is still necessary to achieve a correct balance between the magnetic strengths of float and indicator elements this balance may be more easily achieved than for conventional indicators, this being because of the more stable attitude of the indicator elements of an indicator in accordance with the invention as compared with the attitude of those of a conventional liquid level indicator.

A particularly neat, simple and elegant indicator element construction is obtained if a wafer of a particulate magnetic material distributed within a plastics carrier material is moulded around a pivot wire placed in the mould to provide a one-piece unit including wafer and pivot wire. Such wafers are particularly easy and economical to manufacture.

The float magnet may be a conventional, vertically disposed bar magnet preferably, as described above, with an iron ring to concentrate the field into a desired narrow area. However, this arrangement tends to be rather bulky and furthermore, we find that when using such float magnets, the tendency for the poles at the longitudinal ends of the bar magnet to actuate the indicator elements and cause them to rotate past their vertical position cannot always be overcome. Hence we find it at least desirable when using such float magnets to provide stops on the indicator elements thus making them rather more bulky and less simple to manufacture.

We find the above difficulty may be overcome by employing as a float magnet a ring magnet of annular section provided with a magnetic field geometry such that the outer circumferential periphery is magnetized along its continuous surface and is of a single polarity. Such float magnets are, we find, less bulky and more effective and may provide a powerful magnetic field concentrated over the required narrow area. Indeed the field may be so well concentrated that it is unnecessary to provide stops on the indicator elements, this enabling a magnetized indicator element of a more simple and less bulky construction to be employed.

The annular section ring magnet may be of any material which can be provided with a magnetic field of the geometry described above and is preferably of a sintered magnetic material such as ferritic material. A convenient method of manufacture is to sinter and compress magnetic particulate material into the desired annular section ring shape. The desired magnetic field geometry may be provided by preorienting the particles magnetically prior to compression and sintering. A particularly lightweight construction is a ring magnet made from sintered and compressed magnetic particles. Such rings tend to have a glazed, ceramic appearance and are hereinafter called "ceramic magnets".

Description of the Preferred Embodiments

Embodiments of the present invention will now be described in more detail with reference to the accompanying drawings, in which:

Figure 1 shows a side elevation of a magnetic liquid level indicator in accordance with the invention, with part broken away,

Figure 2 is a front elevation of the indicator of Figure 1, with part broken away,

Figures 3a and 3b are enlarged front and side elevations respectively of one form of wafer which can be used as an indicator plate in the indicator of Figure 1 and

Figure 3c shows a cross-section along the line A—A of Figure 3a.

Figures 4a, 4b and 4c show a wafer construction alternative to that of Figures 3a—3c, Figure 4a showing a longitudinal section (part broken away), Figure 4b showing a side elevation and Figure 4c showing a front view (part broken away), and

Figures 5a and 5b show a radial cross section and plan view respectively of one form of magnet which can be incorporated in a magnetic float of the indicator of Figure 1.

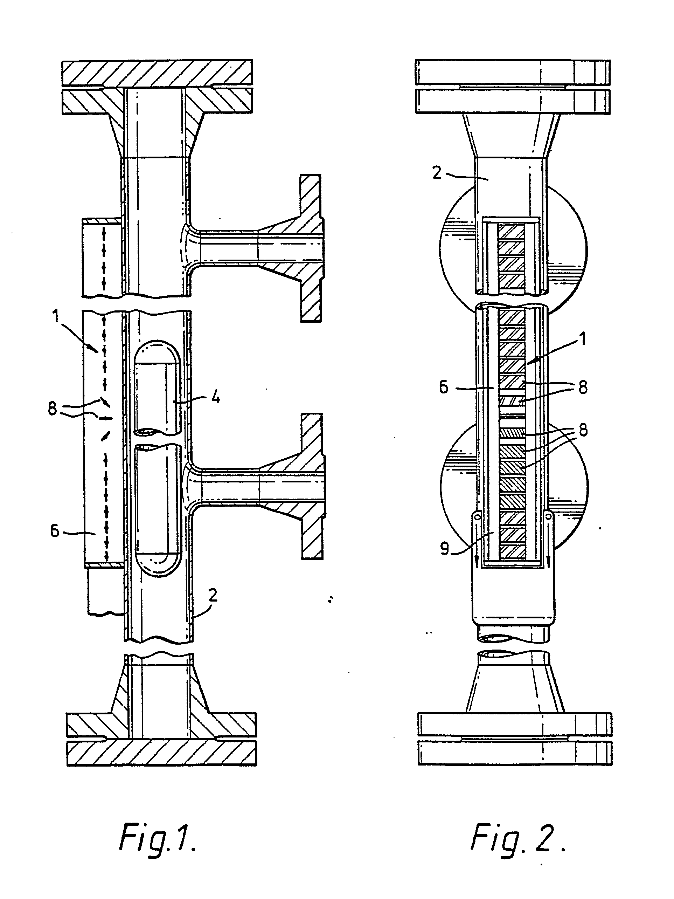

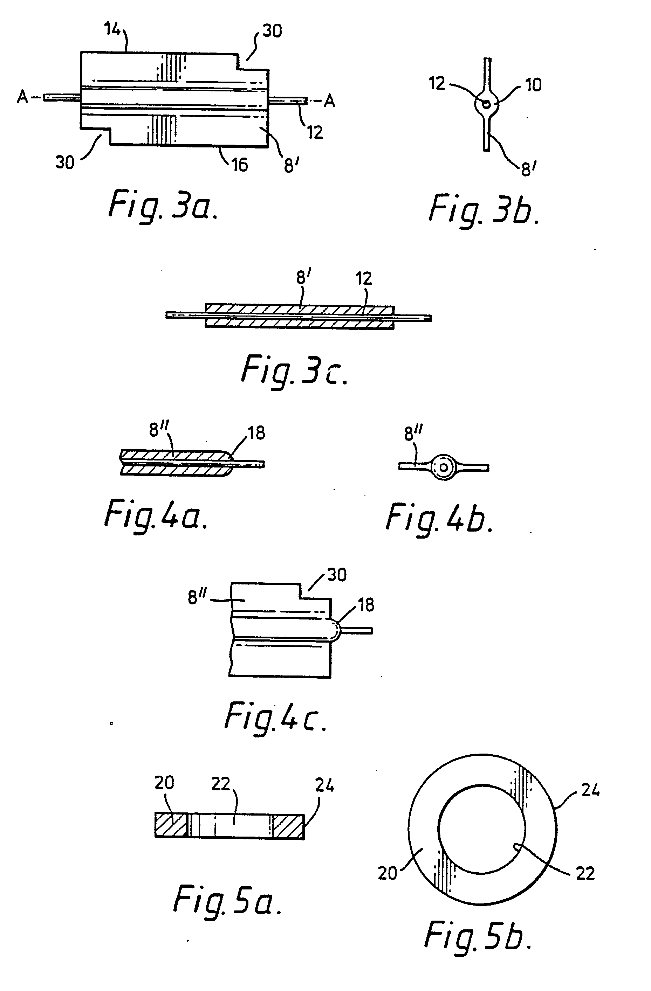

Referring firstly to Figures 1 and 2, these show a liquid level indicator generally indicated as 1, fitted for indicating the level of liquid in a housing 2. The indicator 1 includes a stainless steel float 4 (Figure 1) capable of moving as the liquid level moves up or down in the housing 2 and carrying a permanent magnet, for example a conventional vertically disposed bar magnet with complementary central poles and an iron ring to concentrate the field to the desired narrow area, or a ring magnet described with more detail later with reference to Figures 5a and 5b. The indicator 1 also includes a display box 6 across which extends a plurality of horizontally disposed wires supported by the display box 6 (omitted from Figures 1 and 2 for clarity but shown in Figures 3 and 4), these wires being spaced apart one above the other. Each wire carries a respective wafer 8, preferred constructions of which are described below with reference to Figures 3 and 4. The wafers 8 are either capable of rotating about the respective wires through 180°, or, in an alternative and preferred embodiment, each respective wafer and wire is formed as a one-piece unit and opposite ends of the wire are rotatable in respective apertures provided in opposite sides of the display box 6, which also serves to support the pivot wires. Wafers of this latter construction are particularly simple and economic to manufacture. Opposite surfaces of each wafer are provided with a different color (for example, one surface may be red and the other silver). This is indicated by the shading of the wafers in Figure 2.

As the liquid rises or falls in the housing 2, the float 4 rises or falls with the liquid and the magnetized wafers are, in turn, subjected to the magnetic field of the permanent magnet in the float 4 and are thereby rotated through 180° so that wafers 8 below the liquid level present a face having one of the two colors while wafers above the liquid level present a face having the other of the two colors. This gives a readily observable indication of liquid level to the viewer as can be seen from Figure 2.

Conveniently, the display box 6 may extend to a region 9 below the lowest level to which liquid would descend (see Figure 2). The wafers in the region would normally never be acted upon by the magnetic float. If, however, the float became damaged (e.g. punctured or collapsed) it would sink and rotate the wafers through 180° giving a readily visible indication to the viewer that the float had sunk.

Referring now to Figures 3a—3c, these show one form of wafer 8' which is generally planar but which has a central, generally cylindrical part 10 through which a wire 12 passes, the wafer 8' being freely rotatable about wire 12. Opposed longitudinal edges 14, 16 run between opposite longitudinal ends of the wafer. The wafer 8' is constructed from injection moulded ferrite and is provided with a much stronger magnetic field relative to its rotational inertia than conventional plates. Furthermore, the polarization is such that the complete top longitudinal edge 14 is provided with one polarity and the complete bottom longitudinal edge 16 is provided with the opposite polarity. Adjacent wafers 8' remote from the permanent magnet of the float 4 therefore provide respective juxtaposed surfaces of opposite and strong polarity. The wafers 8' are strongly attracted towards one another and are thus locked in their vertical position to present a continuous vertical surface to the viewer.

This is an extremely stable configuration and the wafers 8' do not tend to move out of this vertical alignment until acted upon by the magnetized float. When the liquid level changes and the permanent magnet of the float rotates a particular wafer 8', rotation through 180° occurs. Owing to the strong, stable magnetic field, a rapid and positive flip-over is achieved, and the wafers are stable to outside influences such as vibrations or passing magnetic fields. Stops may be provided to prevent undesirable rotation past the vertical position, in which case one corner at each end of the wafers 8' is cut away as shown at 30 in Figure 3a to permit the wafer to pass over one of the stops during its rotation from one vertical position to the other. However, in preferred constructions of liquid level indicator in accordance with the invention a magnetized float is chosen which renders it unnecessary to fit such stops. This simplifies the design as compared with conventional liquid level indicators. The wafers 8' are of extremely light-weight construction and may be very small. They are, however, somewhat thicker than conventional plates since this enables a stronger magnetic field to be applied.

Their design may be of a more elegant and even simpler construction than that shown in Figures 3a—3c. The wafers 8' of Figures 3a—3c are generally fitted with washers at the opposite axial ends of the cylindrical part 10 where the wire 12 emerges (through these washers are omitted from Figures 3a—3c for clarity). However, these washers may be dispensed with if the wafers are provided with rounded edges 18 (see wafers 8" of Figures 4a—4c).

In a still more elegant and simple construction, the wafer 8 or 8' and pivot wire 12 are formed as a one-piece unit and apertures are provided in opposite sides of the display box 6, within which opposite ends of the wires rotate. The one-piece unit may be formed by moulding the mixture of ferrite and plastics material around the wire supported in the mould.

One form of permanent magnet which can be incorporated in float 4 is the annular section ceramic ring magnet 20 shown in Figures 5a and 5b. The ring magnet 20 is conveniently housed within a buoyant protective sheath of non-magnetic material such as stainless steel or plastics material. When the sheath floats the longitudinal axis of the ring magnet is disposed essentially vertically so that the outer circumferential surface 24 faces the wafers 8 or 8'.

Typically, the ring magnet 20 is manufactured from a sintered ferritic material and is polarized such that the continuous outer circumferential surface 24 is of a single polarity. This is a simple, lightweight construction which provides a powerful magnetic field with concentration of the field over the desired narrow area and allows the stops to be omitted from the wafer 8 or 8' as described above. Because of this special magnetic field geometry the effect of the annular section ceramic ring magnet 20 is omnidirectional in a radial sense. In other words, any portion of the outer circumferential surface 24 may be allowed to face the wafers 8 or 8' to achieve the same desired effect, and hence it is unnecessasry to guide the ring to prevent it from rotation about its longitudinal axis. The polarity of the inner regions of the ring magnet 20 is not particularly important but the inner circumferential surface 22 is usually of a polarity opposite to that of the outer circumferential surface 24.

As an alternative to the above mentioned annular section ring magnet 20, the permanent magnet of the float may be a conventional, essentially vertically disposed, bar magnet with complementary central poles and an iron ring to concentrate the field into the desired area. Again this is conveniently housed within a protective buoyant sheath as described with reference to ring magnet 20. When using a bar magnet with a central iron ring as the permanent magnet of the float it is preferred to fit stops on the wafers 8 or 8' to prevent the wafers from being undesirably rotated past their 180° position by the polarity of the ends of the bar magnet.

Whatever form of float magnet is chosen it is desirable to achieve within limits, the correct balance between the relative strengths of the magnetic fields of the float magnet and display wafers respectively. This balance is more readily achieved for liquid level indicators in accordance with the invention as compared with conventional indicators because of the more stable attitude of the wafers provided by their special magnetic field geometry. Because of this it is possible sometimes in an indicator embodying the invention, to omit the stops from wafers 8 or 8' even when using a bar magnet with an iron ring as the float magnet provided that a delicate balance between the relative magnetic strengths of float and wafers is achieved and provided that the conditions, e.g. temperature, are not likely to vary too greatly. However, as explained above, for such a float magnet it is preferred to employ stops for the wafers.

## Claims

1. A liquid level indicator (1) capable of indicating the level of liquid in a housing (2), which indicator includes a magnetized float (4) capable of moving as the liquid level moves and a plurality of elongate plate-like magnetized indicator elements (8) disposed one above the other past which the magnetized float (4) travels as the liquid level rises or falls, the magnetized indicator elements (8) (a) each having opposite surfaces which are visually distinguishable from one another, (b) having respective surfaces generally of the same visual appearance as one another oriented generally in a vertical plane when the magnetized float is remote therefrom and (c) being pivotable about their respective longitudinal axes under the action of the magnetized float (4) when the magnetized float (4) lies adjacent thereto so as to provide said liquid level indication, characterized in that the magnetized indicator elements (8) are each of a moulded mixture of particulate magnetizable material and plastics masterial, the said magnetized indicator elements (8) being selectively polarized substantially completely along opposed longitudinal edges (14, 16) of the magnetized indicator element, which longitudinal edges (14, 16) have respective polarities which are opposite from one another.

2. A liquid level indicator according to Claim 1, wherein the masgnetized indicator elements (8) are respective injection mouldings.

3. A liquid level indicator according to Claim 1 or Claim 2, wherein the magnetizable material is a ferritic material.

4. A liquid level indicator according to Claim 1, Claim 2 or Claim 3, wherein each magnetized indicator element (8) is a one-piece unit comprising a pivot wire around which the mixture of particulate magnetizable material and plastics material has been moulded, opposite ends of the pivot wire being rotatable within apertures in a pivot wire support.

5. A liquid level indicator according to any one of the preceding Claims, wherein the float (4) includes a bar magnet and an iron ring surrounding a central region of the bar magnet, the iron ring being provided with a polarity opposite to that of the bar magnet ends and the float being adapted to float so that the bar magnet is essentially vertically disposed.

6. A liquid level indicator according to any one of Claims 1 to 4, wherein the float includes a ring magnet (20) of annular section magnetized such that the outer circumferential periphery (24) is magnetized along its continuous surface and is of a single polarity the float being adapted to float so that the longitudinal axis of the ring magnet (20) is vertically disposed.

7. A liquid level indicator according to Claim 6, wherein the said ring magnet (20) is made from a ferritic material.

## Revendications

1. Indicateur de niveau de liquide (1) capable d'indiquer le niveau d'un liquide dans une enceinte (2), ledit indicateur comprenant un flotteur aimanté (4) pouvant se déplacer avec le niveau du liquide lors des déplacements de celui-ci, et une pluralité d'éléments indicateurs aimantés (8) en forme de plaquettes allongées, disposées l'une au-dessus de l'autre et derrière lesquelles le flotteur aimanté (4) se déplace avec le niveau montant ou descendant du liquide, les éléments indicateurs aimantés (8) (a) comportant chacun des surfaces opposées visuellement discernables l'une de l'autre, (b) comportant des surfaces respectives d'aspect visuel généralement identique l'un à l'autre, orientés généralement dans un plan vertical quand le flotteur aimanté est éloigné desdits éléments, et (c) pouvant pivoter autour de leurs axes longitudinaux respectifs sous l'action du flotteur aimanté (4) quand celui-ci se trouve au voisinage desdits éléments, en donnant ainsi une indication du niveau du liquide, caractérisé en ce que les éléments indicateurs aimantés (8) sont constitués chacun d'un mélange moulé de particules d'un matériau aimantable et d'une matière plastique, lesdits éléments indicateurs (8) étant sélectivement polarisés suivant sensiblement la totalité des bords longitudinaux opposés (14, 16) desdits éléments indicateurs aimantés, les polarités respectives desdits bords longitudinaux (14, 16) étant contraires l'une de l'autre.

2. Indicateur de niveau de liquide suivant la revendication 1, dans lequel chacun desdits éléments indicateurs aimantés (8) est obtenu par moulage par injection.

3. Indicateur de niveau de liquide suivant la revendication 1 ou la revendication 2, dans lequel le matériau aimantable est un matériau ferritique.

4. Indicateur de niveau de liquide suivant la revendication 1, la revendication 2 ou la revendication 3, dans lequel chacun des éléments indicateurs aimantés (8) est constitué d'une seule pièce comprenant un fil métallique servant d'axe de pivotement et autour duquel le mélange de particules de matériau aimantable et de matière plastique a été moulé, les extrémités opposées du fil de pivotement pouvant pivoter dans des ouvertures d'un support pour lesdits fils de pivotement.

5. Indicateur de niveau de liquide suivant l'une quelconque des revendications précédentes, dans lequel le flotteur (4) comprend un aimant en barreau et un anneau de fer entourant une zone centrale dudit aimant en barreau, ledit anneau de fer étant de polarité contraire de celle des extrémités de l'aimant en varreau et le flotteur étant adapté pour flotter de telle manière que l'aimant en barreau soit disposé sensiblement verticalement.

6. Indicateur de niveau de liquide suivant l'une quelconque des revendications 1 à 4, dans lequel le flotteur comprend un aimant annulaire (20) de section annulaire aimanté de telle façon que sa périphérie circonférentielle extérieure (24) soit aimantée le long de sa surface continue et qu'elle soit d'une polarité unique, le flotteur étant adapté pour flotter de telle manière que l'axe longitudinal de l'aimant en anneau (20) soit disposé verticalement.

7. Indicateur de niveau de liquide suivant la revendication 6, dans lequel ledit aimant en anneau (20) est fabriqué en matériau ferritique.

## Patentansprüche

1. Flüssigkeitsstandanzeiger (1) zum Anzeigen des Pegelstandes einer Flüssigkeit in einem Gehäuse (2), bestehend aus einem magnetisierten Schwimmer (4), der sich bei einer Veränderung des Flüssigkeitspegels beweg, und einer Vielzahl länglicher plattenartiger magnetisierter Anzeigeelemente (8), die übereinander angeordnet sind, und an denen sich der magnetisierte Schwimmer (4) vorbeibewegt, wenn der Flüssigkeitspegel steigt oder fällt, wobei die magnetisierten Anzeigeelemente (8) (a) jeweils einander gegenüberliegende Oberflächen aufweisen, die optisch voneinander unterscheidbar sind, (b) entsprechende Flächen haben, die im allgemeinen das gleiche optische Aussehen haben, wenn sie in einer im allgemeinen vertikalen Ebene übereinander angeordnet sind, wenn der magnetisierte Schwimmer im Abstand davon angeordnet ist und (c) unter der Wirkung des magnetisierten Schwimmers (4) um ihre zugeordnete Längsachse schwenkbar sind, wenn der magnetisierte Schwimmer (4) neben ihen liegt, um eine Flüssigkeitsstandanzeige zu schaffen, dadurch gekennzeichnet, daß die magnetisierten Anzeigeelemente (8) jeweils eine geformte Mischung aus Teilchen eines Magnetisierbaren Materials und eines Kunststoffmaterials sind, wobei die magnetisierten Anzeigeelemente (8) wahlweise polarisiert sind im wesentlichen über die gesamte Länge der gegenüberliegenden Längsränder (14, 16) des magnetisierten Anzeigeelements, welche Längsränder (14, 16) zugeordnete Polaritäten haben, die einander entgegengesetzt sind.

2. Flüssigkeitsstandanzeiger nach Anspruch 1, wobei die magnetisierten Anzeigeelemente (8) jeweils Spritzgußteile sind.

3. Flüssigkeitsstandanzeiger nach Anspruch 1 oder 2; wobei das magnetisierbare Material ein ferritisches Material ist.

4. Flüssigkeitsstandanzeiger nach Anspruch 1, 2 oder 3, wobei jedes magnetisierte Anzeigeelement (8) eine einstückige Einheit ist, bestehend aus einem Gelenkdraht, um den die Mischung aus Teilchen eines magnetisierbaren Materials und Kunststoffmaterials herumgegossen ist, wobei gegenüberliegende Enden des Gelenkdrahtes in Öffnungen einer Gelenkdrahtabstützung drehbar sind.

5. Flüssigkeitsstandanzeiger nach einem der vorhergehenden Ansprüche, wobei der Schwimmer (4) einen Stangenmagnet und einen Eisenring umfaßt, der einen zentralen Bereich des Stangenmagneten umfibt, wobei der Eisenring eine zu den Enden des Stangenmagneten entgegengesetzte Polarität hat und wobei der Schwimmer in einer Lage schwimmt, in der der Stangenmagnet im wesentlichen vertikal angeordnet ist.

6. Flüssigkeitsstandanzeiger nach einem der Ansprüche 1 bis 4, wobei der Schwimmer einen Ringmagnet (20) mit kreisförmigem Querschnitt umfaßt, der so magnetisiert ist, daß der Außenumfang (24) längs seiner durchgehenden Fläche magnetisiert ist und eine einzige Polarität hat, wobei der Schwimmer in einer solchen Lage schwimmt, daß die Längsachse des Ringmagneten (20) vertikal angeordnet ist.

7. Flüssigkeitsstandortanzeiger nach Anspruch 6, dadurch gekennzeichnet, daß der Ringmagnet (20) aus einem ferritischen Material hergestellt ist.

Fig.1.

Fig.2.

0 063 020

Fig. 3a.

Fig. 3b.

Fig. 3c.

Fig. 4a.

Fig. 4b.

Fig. 4c.

Fig. 5a.

Fig. 5b.